# EUROPÄISCHE PATENTSCHRIFT

(11) **EP 1 778 580 B1**
(45) Veröffentlichungstag und Bekanntmachung des Hinweises auf die Patenterteilung: **08.12.2010**
(21) Anmeldenummer: 05782452.6
(22) Anmeldetag: 16.08.2005
(51) Int. Cl.: B66D 1/58, G01L 5/04

(54) **HEBEZEUG MIT DEHNUNGSSENSOR**
HOIST COMPRISING A STRAIN SENSOR
ENGIN DE LEVAGE A CAPTEUR D'EXTENSION

(30) Priorität: 18.08.2004 DE 102004040180
(43) Veröffentlichungstag der Anmeldung: 02.05.2007
(73) Patentinhaber: Konecranes Plc, 05830 Hyvinkää (FI)
(72) Erfinder: FINZEL, Manfred, 74653 Künzelsau (DE); KIRCHER, Timo, 74535 Mainhardt-Lachweiler (DE)
(74) Vertreter: Rüger, Barthelt & Abel Patentanwälte
(86) Internationale Anmeldenummer: PCT/EP2005/008884
(87) Internationale Veröffentlichungsnummer: WO 2006/018276

(56) Entgegenhaltungen:
- EP-A- 1 308 414
- DE-A1- 19 512 103
- DE-U1- 8 520 140
- US-A- 4 613 800
- US-A- 6 144 307

## Beschreibung

Um eine Überlastung von Hebezeugen zu vermeiden ist es erforderlich, die Hakenlast zu erfassen. Eine solche Überlastung kann entstehen, wenn sich der Haken bei der Hubbewegung mitsamt Last verklemmt oder falls eine Last mit zu großen Gewicht angehängt wird. Hierdurch entstehen gefährliche Situationen, die zum Absturz der Last und/oder des Hebezeugs führen können. Die Sicherheitsvorschriften sehen deswegen vor, dass das Hebezeug mit entsprechenden Kraftmessmitteln versehen sein muss, um solche Überlastungen zu vermeiden. Wird eine Überlastung festgestellt, schaltet der Antrieb des Hebezeugs automatisch ab.

Außerdem werden Lastmessungen benötigt, um zu entscheiden, ob vom Langsamgang auf einen Schnellgang umgeschaltet werden kann. Diese Umschaltung ist Lastabhängig, weil im Falle von Asynchronmotoren zum Antrieb des Hebezeug das Kippmoment von der Betriebsfrequenz des Motors abhängig ist. Je höher die Betriebsfrequenz ist, umso kleiner ist das Kippmoment, d.h. hohe Lasten dürfen nicht mit hohen Frequenzen und damit hohen Drehzahlen gehoben werden.

Zur Erfassung der Hakenlast ist es im Falle von Kettenzügen bekannt, die Axialkraft, die an einer Zwischenwelle des Getriebes auftritt, zu erfassen. Die Kettenzüge verfügen über Zahnrädergetriebe mit Schrägverzahnung. Aufgrund der Schrägverzahnung entsteht bei Belastung des Hakens ein entsprechender Schub, parallel zur Richtung der Achse der von der Belastung abhängig ist. Diese Kraft wird beispielsweise mit Hilfe einer Druckmessdose gemessen, oder es wird der Verschiebeweg gegen eine Druckfeder erfasst. Nachteilig bei dieser Art der Messung ist die verhältnismäßig große Hysterese, die von der Zahnflankenreibung in axialer Richtung herrührt.

Im Falle von Seilzügen wird davon Gebrauch gemacht, an einem Ende der Seiltrommel das Gewicht zu messen. Hierbei ist nachteilig, dass das Messergebnis, abhängig vom Ablaufpunkt des Seils, längs der Trommel ist.

Eine andere Form der Gewichtserfassung ist in der G 85 20 140 U1 beschrieben. Diese Druckschrift erläutert eine Seilwinde, besser einen Seilzug, bei dem ein Ende der Seiltrommel in einem Pendelrollenlager aufgenommen ist. Das andere Ende steckt drehfest auf der Ausgangswelle eines von einem Elektromotor angetriebenen Getriebes. Das Getriebegehäuse ist über eine Drehmomentstütze mit dem Tragwerk verbunden. Die Drehmomentstütze hat eine etwa U-förmige Gestalt, wobei ein Schenkel mit dem Getriebegehäuse und der andere Schenkel mit dem Tragwerk verbunden ist. Durch die Reaktionskraft wird die Drehmomentstütze elastisch verformt. Die Verformung wird mit Hilfe eines Dehnungsmessstreifens erfasst, der die Verbiegung in ein elektrisches Signal umwandelt.

Die Belastungserfassung dient ferner als Grundlage für die Berechnung des Lastkollektivs.

Ausgehend hiervon ist es Aufgabe der Erfindung ein Hebezeug zu schaffen, dass eine genauere Erfassung der Hakenlast gestattet.

Eine weitere Aufgabe bestehet darin, eine einfache und genaue Messung der Fahrantriebskraft bei Kranen und Katzfahrwerken zu schaffen.

Diese Aufgaben wird erfindungsgemäß mit dem Hebezeug mit den Merkmalen des Anspruches 1 oder 2 gelöst.

Bei dem neuen Hebezeug ist ein Antriebsmotor an einem Getriebegehäuse angeflanscht. Das Getriebegehäuse weist zwei einander gegenüberstehende Lagerschilde auf, die Lagersitz für Getriebewellen enthalten. Eine der Wellen ist eine Ausgangswelle, die mit einem Ende aus dem Getriebegehäuse auskragt. Mit diesem auskragenden Ende wird ein Lastaufnahmemittel angetrieben.

Der Antrieb des Lastaufnahmemittels kann mit Hilfe einer Kettennuss, einer Seilscheibe oder einer Seiltrommel geschehen, je nachdem ob es sich bei dem Hebezeug um eine Seilwinde, einen Kettenzug oder einen Bandzug handelt.

In einem der Lagerschilde ist ein Sensor untergebracht, der sich neben einem der Lagersitze befindet. Mit Hilfe dieses Sensors wird die elastische Verformung des Lagerschilds in der Umgebung des betreffenden Lagersitzes erfasst.

Die Verformung in dem betreffenden Lagerschild ist eine Folge der an diesem Lagerende auftretenden Querkraft. Die Querkraft dort ist im allgemeinen eine Funktion des an dieser Welle übertragenen Drehmoments. Lediglich im Falle der Ausgangswelle addiert sich zu der Querkraft, die durch das Antriebs- oder Abtriebsmoment erzeugt ist, eine Kippkraft hinzu, die von der Hakenlast herrührt und die bestrebt ist, die auskragende Ausgangswelle um das dazwischen liegende Lager zu verkippen.

Um eine möglichst fehlerfreie Messung zu bekommen, sollte der Ort für den Sensor so gewählt werden, dass das Messergebnis nicht durch die Überlagerung von mehreren Spannungen, die im Lagerschild auftreten, verfälscht wird. Insbesondere muss der Ort so gewählt werden, dass von den benachbarten Lagersitzen ausgehende Kräfte das Nutzsignal nicht verkleinern, weil am Ort des Sensors von anderen Lagersitzen Spannungen induziert werden, die ein entgegengesetztes Vorzeichen haben, wie die Kraft, die vom benachbarten Lagersitz ausgeht, der gemessen werden soll.

Die Spannungsmessung in dem Lagerschild kann sowohl bei Getriebe mit Gradverzahnung als auch bei Getrieben mit Schrägverzahnung vorgenommen werden.

Der Sensor zur Messung der Spannung im Gehäuse bzw. der elastischen Verformung ist bevorzugt ein gekapselter DMS-Sensor ( = Dehnungsmessstreifensensor, straingagesensor). Solche Sensoren sind sehr hysteresefrei und empfindlich. Insbesondere sind sie von Haus aus bis zu einem gewissen Grad temperaturkompensiert, ohne das zusätzliche Maßnahmen ergriffen werden müssen.

Sensoren dieser Art sind beispielsweise von der Firma Sensya unter der Bezeichnung "Model K 3003", oder der Firma Tecsis GmbH zu beziehen.

Die oben beschriebenen Zusammenhänge und Vorteile werden auch in Verbindung mit Fahrantrieben für Katzfahrwerke und Kräne erreicht. Hierbei sitzt das Getriebe anstatt, wie erläutert zwischen Motor und Lastaufnahmemittel, zwischen Motor und wenigstens einem angetriebenen Rad. Ansonsten ergeben sich für das Getriebe selbst dieselben Verhältnisse. Auch hier muss dabei darauf geachtet werden, dass durch die Befestigung am Fahrwerksrahmen keine zusätzlichen die Messung verfälschenden Spannungen eingeleitet werden oder die Steifheit des Lagerschildes im Bereich des Messortes verändert wird, so dass es zu Verfälschungen kommt.

Die Aufnahmebohrung kann eine Sackbohrung sein oder eine Durchgangsbohrung, wobei letzteres deswegen besonders einfach ist, weil auf diese Weise das Anschlusskabel unmittelbar aus dem Getriebegehäuse herausgeführt werden kann.

Damit die Messung hysteresefrei ist und sehr empfindlich, sitzt das Gehäuse des Sensors, vorzugsweise mit Presssitz, in der Aufnahmebohrung.

Das Gehäuse ist einfachheitshalber rotationssymmetrisch, d.h. zylindrisch, und parallel zur Achse des Lagersitzes ausgerichtet. Dies vereinfacht die Montage und die Herstellung erheblich.

Außerdem hat der Presssitz den Vorteil, dass gleichzeitig die erforderliche Abdichtung gewährleistet ist.

Der Sensor wird, um ein maximales Nutzsignal zu erzeugen, auf der Verlängerung desjenigen Radius der benachbarten Lagerbohrung angeordnet, der parallel zum Querkraftvektor liegt, der an dem betreffenden Lagerende angreift bzw. zu erfassen ist.

Der Querkraftvektor kann im Falle einer Zwischenwelle ein Querkraftvektor sein, der sich ausschließlich aus dem Antriebsmoment ergibt, während der Querkraftvektor im Falle der Ausgangswelle zusätzlich ein Kippmoment enthält, dass bestrebt ist, die Ausgangswelle um jenes Lager zu kippen, das dem auskragenden Ende unmittelbar benachbart ist. Grob gesagt befindet sich der Sensor auf einer Geraden durch die Achse des Lagersitzes die rechtwinklig zu einer Geraden verläuft, die die Drehachsen der unmittelbar benachbarten Getriebewellen miteinander verbindet. Dabei ist die andere Getriebewelle, die antriebsmäßig in Richtung auf den Motor liegt.

Im Falle der Messung im Bereich der Ausgangswelle sollte darauf geachtet werden, dass der Messort so gewählt wird, dass tatsächlich nur der Fahrwiderstand erfasst wird und nicht zusätzlich eine weitere Kraft, die von der Hakenlast herrührt. Deshalb ist es im Falle von Fahrantrieben häufiger sinnvoll, die Messung an einer Zwischenwelle und nicht an der Ausgangswelle vorzunehmen.

Das Messsignal wird groß, wenn neben einem Lagersitz gemessen wird, der einem Ritzel einer Getriebewelle benachbart ist, soweit es sich nicht um die Ausgangswelle selbst handelt.

Dabei hat die Messung an einer Zwischenwelle den Vorteil, dass das überlagerte Störsignal, das von den Wälzlagern herrührt, eine verhältnismäßig hohe Frequenz aufweist und sich leicht herausfiltern lässt. Bei der Messung an einem Lagersitz der Ausgangswellen ist dagegen die Frequenz entsprechend niedrig und etwas schwerer zu filtern.

Die Größe des Nutzsignals wird ferner verbessert, wenn die Aufnahmebohrung für den Sensor seitlich freigestellt ist. Dadurch wird das Lagerschild in Richtung auf die Lagerbohrung elastischer, was wiederum zu einer größeren Belastung des Sensors führt, jeweils bezogen auf die gleiche Hakenlast.

Die Freistellung der Aufnahmebohrung kann durch zwei seitliche Taschen erfolgen, die sich bezüglich der Bohrung praktisch diametral gegenüberliegen. Jeder der Taschen umgibt die Aufnahmebohrung längs eines Umfangswinkels zwischen 90° und 160°. Hierdurch entstehen zwei Stege, deren Längsachsen zweckmäßigerweise parallel zum zur erfassenden Querkraftvektor liegen, jeweils gemessen in der Ebne des Lagerschilds und damit rechtwinklig zur Drehachse der betreffenden Welle.

Je nach Steifigkeit des Außenrings des Kugellagers, in dem die betreffende Welle gelagert ist und der Anzahl der Kugeln, können Störsignale im Messsignal auftreten. Diese Störsignale werden durch die elastische Verformung des Außenlagerrings im Bereich des Sensors verursacht. Wenn eine Kugellagerkugel unmittelbar auf der Verbindungsgerade zwischen der Achse der Welle und der Mittelachse des Sensors liegt, wird die Radialkraft bevorzugt über diese Kugel in Richtung auf den Sensor übertragen. Das Signal ist dagegen kleiner, wenn zwei Kugeln symmetrisch bezüglich dieser Geraden liegen. Die Übertragung erfolgt dann über beide Kugeln, womit ein anderer Kraftfluss in der Gehäusewand auftritt.

Wenn das Störsignal eine bestimmte Amplitude überschreitet, kann es zweckmäßig sein, Gegenmaßnahmen zu treffen. Eine mögliche Gegenmaßnahme besteht darin, unmittelbar auf der Verbindungsgeraden, die parallel zu dem radialen Kraftvektor liegt, eine Nut im Lagersitz vorzusehen. Hierdurch wird eine Situation simuliert, als würde immer die Kraft über zwei Kugeln übertragen werden. Dadurch werden ähnliche Kraftflussverhältnisse erreicht, wenn zwei Kugeln rechts und links der Nut stehen oder eine Kugel in der Mitte der Nut. Im letzteren Fall, wird die Kraft vom Außenring in derselben Weise übertragen wie durch zwei Kugeln.

Eine andere Möglichkeit besteht darin, unmittelbar auf der erwähnten Verbindungsgeraden, die auch gleichzeitig die Richtung des radialen Kraftvektors angibt, im Lagersitz eine Rippe vorzusehen, während rechts und links der Rippe das Kugellager durch entsprechende Nuten freigestellt ist. Diese Maßnahme stellt sicher, dass unabhängig von der Relativstellung der Kugeln zu dem Steg immer die Summe allen Teilkraftvektoren übertragen wird. Jeder Teilkraftvektor entspricht dabei der Reaktionskraft jeder einzelnen Kugel. Es wird somit immer die Summenkraft aller Kugeln aus jenem Halbkreis auf den Sensor übertragen, der dem Sensor benachbart liegt. Eine andere Krafteinleitung als über den Steg ist nicht möglich. Der Erstreckungswinkel für die beiden Nuten längs dem Umfang ist empirisch zu ermitteln und ist vorzugsweise kleiner gleich 180°; es wäre auch eine Dreipunkthalterung möglich.

Schließlich besteht noch die Möglichkeit darin, den Lagersitz für das betreffende Wälzlager über Biegefedern mit der Gehäusewand zu verbinden. Die Biegeachse ist jeweils parallel zur Drehachse der Welle. Auch bei dieser Anordnung erhält der Sensor als Kraftsignal das Summensignal aus allen Lagerkugeln, die die betreffende Radialkraft aus der Last übertragen.

Im übrigen sind Weiterbildungen der Erfindung Gegenstand von Unteransprüchen.

Die nachfolgend beschriebenen Ausführungsbeispiele sind vielfältig abwandelbar. Die jeweilig erforderlichen Änderungen ergeben sich aus den Randbedingungen der Gehäusekonstruktion und aus dem jeweiligen Anforderungen. Um den Umfang der Figurenbeschreibung nicht zu sprengen wurde auf eine solche Erläuterung verzichtet.

In der Zeichnung ist ein Ausführungsbeispiel des Gegenstandes der Erfindung dargestellt. Es zeigen:
- Fig. 1: das erfindungsgemäße Hebezeug in einer perspekti- vischen Gesamtansicht,
- Fig. 2: einen Längsschnitt durch das Getriebegehäuse,
- Fig. 3: eine Draufsicht auf das Lagerschild mit dem Sen- sor,
- Fig. 4: einen Schnitt durch das Lagerschild in einer Ebe- ne, die die Achse des Lagersitzes und die Achse der Aufnahmebohrung enthält, in einer vereinfach- ten Darstellung,
- Fig. 5: eine Prinzipdarstellung eines erfindungsgemäßen Seilzugs in einer perspektivischen Darstellung und
- Fig. 6: ein Katzfahrwerk zur Veranschaulichung eines wei- teren Einsatzgebietes der Erfindung, in einer schematischen Darstellung in einer Stirnansicht.

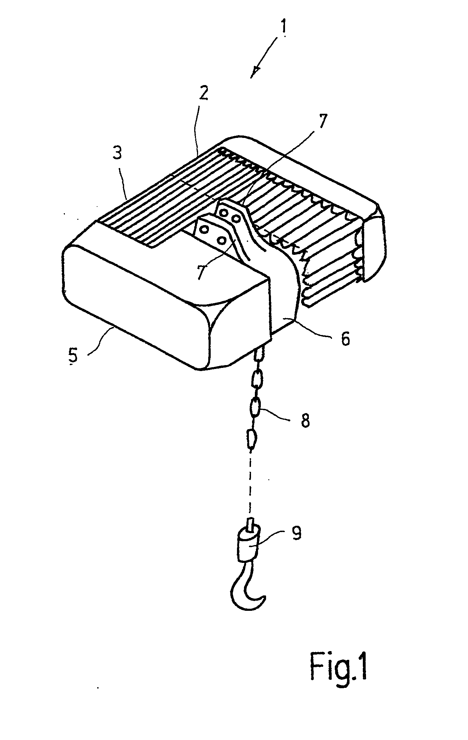

Fig. 1 zeigt in einer vereinfachten perspektivischen Darstellung einen erfindungsgemäßen Kettenzug 1. Der Kettenzug 1 weist ein etwa quaderförmiges Getriebegehäuse 2 auf, an dessen einer Stirnseite ein Elektromotor in Gestalt eines Asynchronmotors angeflanscht ist. Sowohl das Getriebegehäuse 2 als auch der Motor 3 sind mit durchlaufenden Kühlrippen versehen, wie dies die Figur erkennen lässt. Auf der von dem Getriebegehäuse 2 abliegenden Seite ist an dem Motor 3 ein Deckel 4 vorgesehen, der die Steuerung bzw. wesentliche Teile der Steuerung enthält. Zwischen dem Steuerungsdeckel 5 und der gegenüberliegenden Stirnseite des Getriebegehäuses 2 befindet sich ein Kettennussgehäuse 6 aus dessen Oberseite 2 Laschen 7 vorstehen, die der Aufhängung des Kettenzugs 1 dienen. Unten aus dem Kettennussgehäuse 6 führt eine Rundgliederkette 8 weg, an deren freien Ende ein Haken 9 befestigt ist.

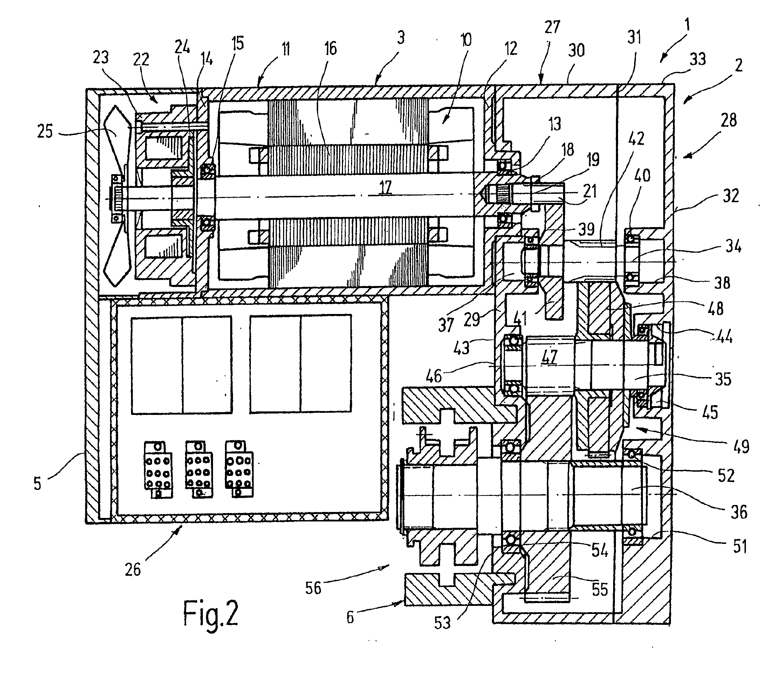

Fig. 2 zeigt den Kettenzug 1 nach Fig. 1 in einem horizontalen Längsschnitt, bezogen auf die normale Gebrauchsstellung.

Bei dem Motor 3 handelt es sich, wie bereits erwähnt, um einen Asynchronmotor mit einer Feldwicklung 10, die in einem Motorgehäuse 11 eingesetzt ist. Das Motorgehäuse 11 ist becherförmig gestaltet in der Weise, dass die in Fig. 1 erkennbare zylindrische mit Kühlrippen versehene Seitenwandanordnung mit einer Stirnwandanordnung 12 einstückig verbunden ist. Die Stirnwand 12 weist einen Lagersitz für ein darin steckendes Rillenkugellager 13 auf. An seiner Rückseite ist das Motorgehäuse 11 durch einen Rückdeckel 14 verschlossen, der in einer entsprechenden Sitzbohrung ein weiteres Rillenkugellager 15 enthält. Mit Hilfe der beiden Rillenkugellager 13 und 15 ist ein Kurzschlussläufer 16, der auf einer Ankerwelle 17 drehfest sitzt, gelagert.

Die Ankerwelle 17 steht nach rechts in Richtung auf das Getriebegehäuse 2 vor und enthält dort eine Längsbohrung 18, in die eine Welle 19 eingepresst ist, die an ihrem vorstehenden Ende ein Ritzel 21 trägt.

Der Rückdeckel 14 ist wiederum seinerseits ein Gehäuse für eine auf die Ankerwelle 17 wirkende Reibungsbremse 22. Zu der Reibungsbremse 22 gehört ein ringförmiger Bremslüftemagnet 23 sowie eine mit der Ankerwelle 17 drehfest verbundene Bremsscheibe 24. Mit Hilfe einer nicht weiter gezeigten Federeinrichtung wird die Bremse in die Bremsstellung vorgespannt und mit Hilfe des Elektromagneten 23 gelüftet.

Auf einem über dem Bremslüftemagneten 23 nach hinten hin ausgehenden Wellenfortsatz steht schließlich ein Lüfterad 25. Sowohl die Bremse 22 als auch der Lüfter 25 laufen in einem Teil des Deckels 5.

Unterhalb des Motors 3 ist eine in dem Gehäuse 5 untergebrachte Steuerungsanordnung 26 zu erkennen.

Das Getriebegehäuse 2 ist eine etwa zweischalige Konstruktion, bestehend aus einer ersten Gehäuseschale 27 und einer zweiten Gehäuseschale 28. Die erste Gehäuseschale 27 weist einen weitgehend ebenen, als Montagefläche dienenden Boden 29 sowie eine um den Rand dieser Montagefläche 29 umlaufenden in sich geschlossene Seitenwandanordnung 30 auf. Ihr Rand 31 liegt in einer Ebene.

Der Boden 29 bildet gleichzeitig eines der Lagerschilde des Getriebegehäuses 2.

Die Grund- oder Montagefläche 29 ist aus der Sicht des Motors 3 etwa rechteckig.

Deckungsgleich mit der Gehäuseschale 27 ist die Gehäuseschale 28, die ebenfalls aus einem Boden 32 und einer Seitenwandanordnung 33 besteht, die einstückig angeformt ist. Der Boden 32 bildet ein dem Boden- oder Lagerschild 29 gegenüberstehendes und dazu parallel verlaufendes Lagerschiff. Die Seitenwandanordnung 33 endet ebenfalls an dem Gehäusespalt 31.

Die Befestigungsschrauben zum Zusammenschrauben der beiden Gehäuseschalen 27, 28 sind der Übersichtlichkeit halber weggelassen.

In dem Getriebegehäuse 2 ist ein insgesamt 3-stufiges Zahnradgetriebe mit zwei Zwischenwellen 34 und 35 sowie einer Ausgangswelle 36. Zur Lagerung der ersten Zwischenwelle 34 sind an der Innenseite der beiden Lagerschilde 29, 32 miteinander fluchtende napfförmige Lager 37, 38 angeformt, in denen Rillenkugellager 39, 40 sitzen. Mittels dieser Rillenkugellager 39 und 40 ist die erste Zwischenwelle 34 mit Hilfe von in der Zeichnung erkennbaren Endzapfen drehbar gelagert. Auf ihr ist ein mit dem Ritzel 21 kämmendes Zahnrad 41 drehfest angeordnet und sie trägt außerdem einstückig ein weiteres Ritzel 42.

Aus der Sicht des Motors 3 weiter abliegend ist die zweite Zwischenwelle 35 angeordnet. Zur Lagerung dieser zweiten Zwischenwelle 35 ist an der Innenseite des Lagerschildes 29 eine napfförmige, ebenfalls nach innen weisender Lagersitz 43 angeformt, der mit einer Lagersitzbohrung 44 in dem Lagerschild 28 fluchtet. Die Lagersitzbohrung 44 enthält ein Rillenkugellager 45, während ein weiteres Rollenlager 46 in dem Lagersitz 43 steckt.

Mittels dieser beiden miteinander fluchtenden Wälzlager 45, 46 ist mit entsprechenden Wellenzapfen die zweite Zwischenwelle 35 drehbar gelagert. Ihr linkes Ende ist, wie gezeigt, als Ritzel 47 ausgeführt, während das rechte Ende der Zwischenwelle 35 ein Zahnrad 48 trägt. Das Zahnrad 48 kämmt mit dem Ritzel 42 und bildet gleichzeitig eine Scheibe einer Rutschkupplung 49.

Da die Rutschkupplung 49 nicht Gegenstand der Erfindung ist, genügt es an der Stelle zu erwähnen, dass das scheibenförmige Zahnrad 48 zwischen zwei mittels einer Feder gegeneinander vorgespannten Platten gehalten ist, von denen wenigstens eine drehfest mit der zweiten Zwischenwelle 35 verbunden ist. Mit Hilfe eines von außen über die Lagerbohrung 44 zugänglichen Einstellgliedes lässt sich das Rutschmoment einstellen. Nach der Einstellung wird die Lagerbohrung 44 mittels eines nicht gezeigten Deckels verschlossen.

Sobald es die Sicherheitsrichtlinien für Hebezeuge zulassen, kann die Rutschbremse 49 entfallen. Das Zahnrad 48 wird dann unmittelbar drehfest auf der Zwischenwelle 35 aufgesetzt.

Die in der Leistungsflussrichtung gesehen letzte Welle des Getriebes ist die Ausgangswelle 36, zu deren Lagerung an der Innenseite des Lagerschildes 28 ein napfförmiger Lagersitz 51 angeformt ist. Diese steht in das innere des Getriebegehäuses 2 vor. Er nimmt ein Rillenkugellager 52 auf, in dem das betreffende Ende der Ausgangswelle 36 steckt. Der Lagersitz 51 befindet sich an einer Stelle, in der das Lagerschild 28 eine Dicke aufweist, die der Tiefe des Lagersitzes 51 entspricht, d.h. die Struktur die den Lagersitz 51 enthält erreicht bis an die Seitenwandanordnung 33 heran, wie dies die Figur erkennen lässt. In dem anderen Lagerschild 29 ist fluchtend mit dem Lagersitz 51 eine Lagerbohrung 53 vorgesehen, die ein Rillenkugellager 54 aufnimmt.

Das nach außen über das Lagerschild 29 überstehende Ende der Ausgangswelle 36 trägt in bekannter Weise drehfest eine Kettennuss 56, die wie üblich mit Kettentaschen für stehende und liegende Glieder einer Rundgliederkette versehen ist. Die Kettennuss 56 dreht sich in dem Kettennussgehäuse 6, das auf der Außenseite des Lagerschildes 29 durch nicht weiter gezeigte Schrauben angeflanscht ist.

Aufgrund der Anordnung befindet sich das Kettennussgehäuse 6 seitlich neben dem Motor 3, wie dies die Schnittzeichnung erkennen lässt.

Außerdem sind ersichlicherweise sämtliche Achsen zueinander parallel. Die gezeigten Zahnräder und Ritzel können gerade verzahnt oder schräg verzahnt sein.

Um die nachfolgend erläuterte Messart möglichst hysteresefrei zu bekommen, kann es von Vorteil sein, wenn dasjenige Zahnrad, an dem die Messung vorgenommen wird, eine Gradverzahnung trägt, damit nur Querkräfte gemessen werden und keine axialen Schubkräfte erzeugt werden, die hysteresebehaftet sind und in die Messung eingehen können.

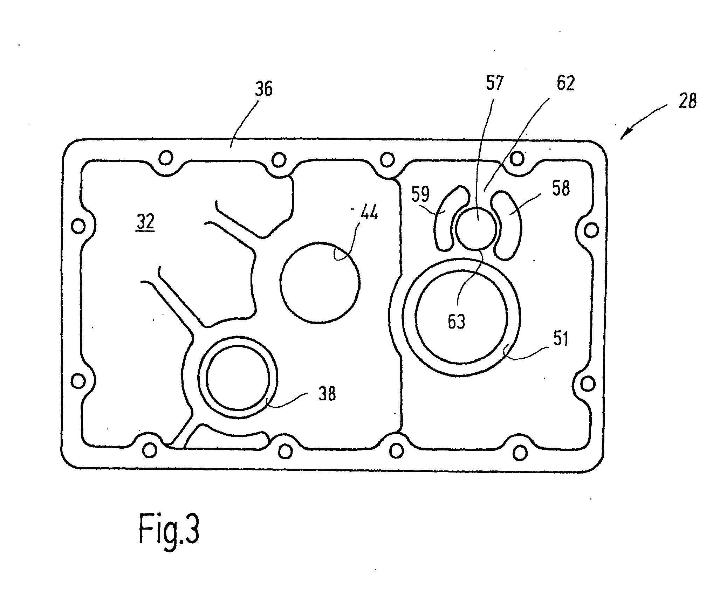

Fig. 3 zeigt eine Draufsicht auf die Innenseite der Gehäuseschale 32. In der Figur sind die bereits erwähnten Lagersitze 38 und 41 sowie die Lagerbohrung 44 zu erkennen. Außerdem ist die Fügefläche 31 zu sehen, an der die Seitenwandanordnung 33 endet, ebenso wie der Boden 32.

Die Fig. 3 lässt ferner erkennen, dass oberhalb des Lagersitzes 51 eine in Fig. 2 weggeschnittene Durchgangsbohrung 57 enthalten ist, die achsparallel zu dem Lagersitz 51 ausgeführt ist. Die Aufnahmebohrung 57 führt durch den verstärkten Bereich des Bodens 32 hindurch und endet sowohl an der Außenseite als auch an der Innenseite des Bodens 32. Seitlich neben der Aufnahmebohrung 57 sind zwei in der Draufsicht etwa nierenförmige Taschen 58 und 59 enthalten, die sich in Richtung auf das Innere des Getriebegehäuses 2 öffnen und zur Außenseite hin geschlossen sind. Durch die beiden nierenförmigen Taschen 58 und 59 entstehen zwei Stege 62 und 63, die auf einer gemeinsamen Geraden liegen, die eine Verlängerung eines Radius des Lagersitzes 51 ist.

Die beiden nierenförmigen Taschen 58 und 59 umgeben die zylindrische Aufnahmebohrung 57 längs eines Umfangswinkels von ca. 110°. Sie liegen allerdings nicht exakt diametral, sondern sie liegen so, dass der Steg 62 etwas schmäler ist als der Steg 63. Diese Lage wird erzwungen, weil die Bohrung 57 möglichst dicht an die Lagerbohrung 51 herangerückt ist. Bei der praktischen Ausführung beträgt die Wandstärke an der dünnsten Stelle zwischen der Aufnahmebohrung 57 und der Sitzfläche für das Kugellager 52 ca. 3 mm. Verallgemeinert bedeutet dies, dass die Dicke des Stegs 63 gemessen in Richtung parallel zur Verbindungsgeraden zwischen dem Lagersitz 61 und der Aufnahmebohrung 57 ca 1/20 des Durchmessers des Lagersitzes 61 beträgt. Damit ist die Wandstärke dort genauso groß wie die Wandstärke im Bereich zwischen der Aufnahmebohrung 57 und der betreffenden nierenförmigen Tasche 58, 59. Diese folgen mit ihrer der Aufnahmebohrung 57 benachbarten Wandfläche konzentrisch der Bohrung 57 in Umfangsrichtung. D. h. der Krümmungsmittelpunkt der seitlichen Wände der Taschen 58 und 59 fällt mit dem Mittelpunkt der Aufnahmebohrung 57 zusammen.

Durch diese Maßnahme wird sichergestellt, dass eine Querkraft, die von dem Lagersitz 51 ausgeht und längs eines Vektors verläuft, der durch die Achse der Bohrung 57 führt, zu einer mehr oder weniger starken Verformung der Bohrung 57 führt.

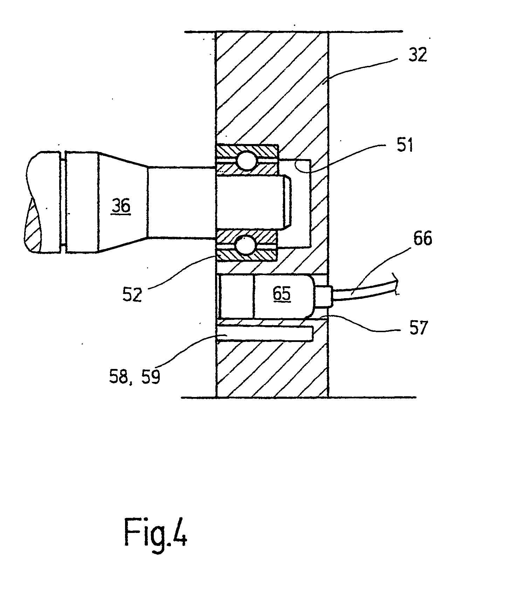

Fig. 4 zeigt nochmals in einer vergrößerten Darstellung die Relation zwischen der Aufnahmebohrung 57 und dem Lagersitz 51, wobei die Schnittrichtung so gewählt ist, dass der Schnitt zunächst der Verbindung zwischen den Mittelpunkten des Lagersitzes 51 mit Aufnahmebohrung 57 folgt und sodann in der Lagerbohrung 57 rechtwinklig sich fortsetzt.

In der Aufnahmebohrung 57 steckt mit Presssitz ein handelsüblicher gekapselter DMS-Sensor 65, dessen Anschlusskabel 66 nach außen aus dem Getriebegehäuse 2 herausführt. Der auf Druck empfindliche Teil des DMS-Sensors 65 befindet sich in unmittelbarer Nachbarschaft des Rillenkugellagers 52. Von dem DMS-Sensor ist lediglich sein hermetisch dichtes Gehäuse sichtbar.

Die Lager der Aufnahmebohrung 57 ist wie folgt gewählt:

Durch das Antriebsmoment des Elektromotors 3, bzw. das Haltemoment der Bremse 22, führt zu einem Drehmoment an dem Zahnrad 55. Dieses dort zu messende Drehmoment ist abhängig von dem Gewicht einer an dem Haken 9 hängenden Last. Da das Drehmoment unsymmetrisch eingeleitet wird, nämlich einerseits über die gegenüber der Achse der Welle 36 versetzen Kettentaschen und andererseits über den Außenumfangs des Zahnrades 55, entsteht ein Querkraftvektor. Der Querkraftvektor liegt im Wesentlichen rechtwinklig zu der Verbindungsgeraden durch die Achse des Lagersitzes 51 bzw. der Lagerbohrung 44. Dementsprechend befindet sich die Aufnahmebohrung 57 auf einer Verlängerung des Radius des Lagersitzes 51 und zwar desjenigen Radius, der parallel zu diesem Vektor ist.

Bei der speziellen Anordnung der Aufnahmebohrung 57, im Bereich der auskragenden Ausgangswelle 36, kommt hierzu noch eine Querkraft, die durch das Kippmoment um eine Horizontalachse hervorgerufen wird. Diese Horizontalachse geht durch die Kugeln des Kugellagers 54. Hierdurch entsteht ein Summenvektor, der sich aus dem Querkraftvektor und dem Kippvektor zusammensetzt. Dementsprechend wird die Lage der Achse der Aufnahmebohrung 57 geringfügig korrigiert, so dass die obige Bedingung hinsichtlich des rechten Winkels zwischen der Geraden, die die Drehachsen der Lagersitze 51 und 44 verbindet, zu der Verbindungsgeraden zwischen der Achse des Lagersitzes 51 und der Aufnahmebohrung 57 nicht exakt eingehalten ist, sondern entsprechend korrigiert ist.

Parallel zu diesem Summenvektor sind die Mitten der beiden Stege 62 und 63 ausgerichtet.

Sobald die Ausgangswelle 36 durch eine Last belastet wird, induzieren die beiden Stege 62 und 63 eine Verformung der Aufnahmebohrung 57, was wiederum zu einer Verformung des mit Presssitz eingesetzten DMS-Sensors 65 führt. Dieser erzeugt ein entsprechendes Ausgangssignal. DMS-Sensoren, die für den Anwendungsfall in Frage kommen, sind auf dem Markt frei erhältlich. Es ist deswegen auch nicht notwendig, den inneren Aufbau eines solchen DMS-Sensors an dieser Stelle explizit zu erläutern.

Die Anordnung des DMS-Sensors 65 neben der Ausgangswelle 36 ist nicht der einzige Ort, an der die Lastmessung erfolgen kann. Es besteht auch die Möglichkeit dem DMS-Sensor 65 neben dem Rillenkugellager 46 unterzubringen, d.h. auf der Ritzelseite, da dort die größte Querkraft an der Zwischenwelle 47 auftritt. Auch hier muss die Aufnahmebohrung mit ihrer Längsachse auf einer Verbindungsgeraden zu der Mitte des Lagersitzes 44 liegen, die rechtwinklig zu der Verbindungsgeraden zwischen der dem Lagersitz 44 und der Mitte des Lagersitzes 51 verläuft.

In dem interessierenden Lastbereich, tritt in der Umgebung des betreffenden Lagersitzes, wo der DMS-Sensor 65 untergebracht ist, eine elastische Verformung auf. Die elastische Verformung ist im Wesentlichen der Hakenlast proportional, so dass am Ausgang des DMS-Sensors 65 ein elektrisches Signal ansteht, bei dem ein Parameter der Last proportional ist, oder zumindest einem empirisch zu ermittelnden Zusammenhang zwischen der Größe des elektrischen Signals und der Belastung erfolgt.

Die Erfassung der Belastung in der erläuterten Weise unterliegt nur einer sehr geringen Hysterese, die letztendlich nur von dem geringen Dämpfungsverhalten des Lagerschildes 32 abhängig ist. Somit ist sehr genau mit geringen Toleranzen und verhältnismäßig sehr schnell die Hakenlast zu ermitteln.

Die Auswerteschaltung, die erforderlich ist, um das elektrische Signal zu verarbeiten, ist bekannt und braucht deswegen an dieser Stelle ebenfalls nicht erläutert zu werden.

Es leuchtet ohne weiteres ein, dass die Art der Lastmessung nicht auf den gezeigten Kettenzug beschränkt ist. Es bedarf keiner weiteren Darstellung um zu erkennen, dass anstelle der Kettennuss 56 auch den überstehenden Zapfen der Ausgangswelle 36 eben so gut an der Bandscheibe aufgesetzt werden kann, um ein Zugband aufzuwickeln, an dem der Haken 9 befestigt ist.

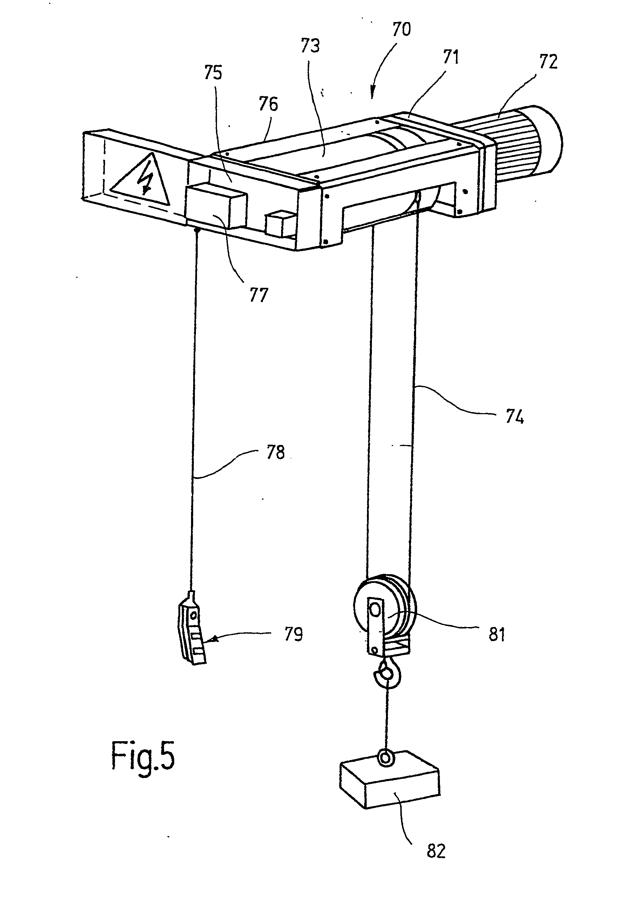

Schließlich kann die Lastmessung auch an einem Seilzug 70 implementiert sein, wie er in Fig. 5 gezeigt ist. Zu dem Seilzug 70 gehört ein Getriebe 71, dass an einer Seite ein Antriebsmotor 72 angeflanscht ist. Mit Hilfe der nicht veranschaulichten Ausgangswelle des Getriebes 71 wird eine Seiltrommel 73 angetrieben, von der ein Seil 74 abläuft. Die Seiltrommel ist andernends in einem Kopfstück 75 gelagert, das über ein Rückenteil 76 mit dem Getriebegehäuse 71 verbunden ist. Das Kopfstück 75 enthält eine Steuerungsanordnung 77, von der ein Steuerkabel 78 ausgeht, dass zu einem Handsteuerschalter 79 führt.

An dem Seil 74 hängt eine Hakenflasche 81, an der eine Hakenlast 82 hängt, die schematisch angedeutet ist.

Der Aufbau des Getriebes 71 kann derselbe sein, wie im Zusammenhang mit Fig. 2 erläutert ist, mit der einzigen Einschränkung, dass der Antriebsmotor an der gegenüberliegenden Seite angeflanscht ist und das die Ausgangswelle 36 die Seiltrommel 73 antreibt.

Das von der Seiltrommel 73 ausgehende Moment, das Lastabhängig ist, kann in derselben Weise erfasst werden, wie dies vorstehend ausführlich erläutert ist.

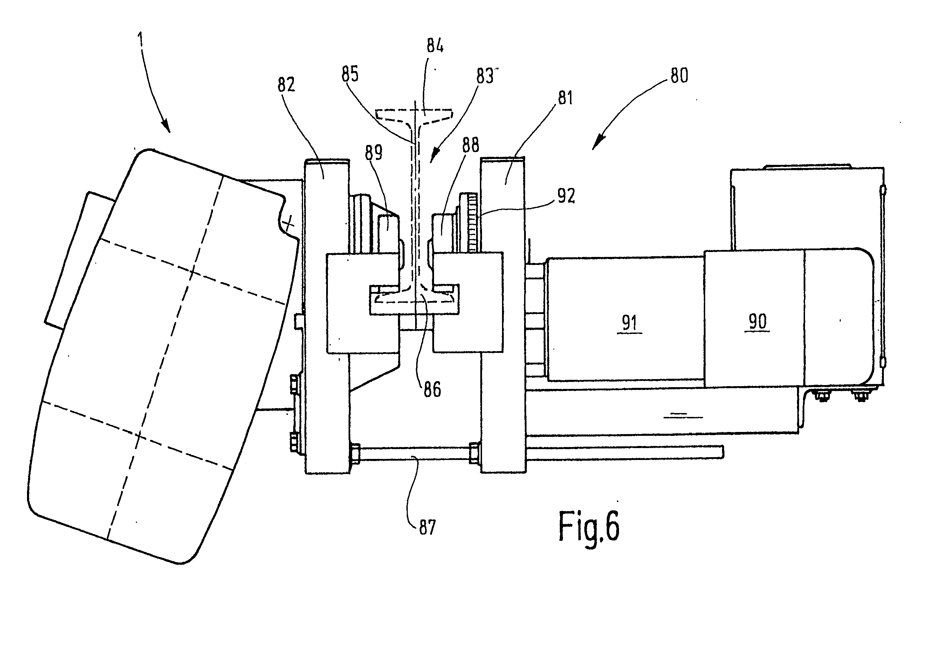

Als weiteres Beispiel für den Einsatz der erfindungsgemäßen Kraftmessung auf dem Gebiet der Hebezeuge ist in Fig. 6 ein Katzfahrwerk 80 gezeigt.

Das Katzfahrwerk 80 weist einen Fahrwerksrahmen auf, zu dem zwei seitliche Fahrwerkswangen 81 und 82 gehören. Die beiden Fahrwerkswangen 81 und 82 liegen beidseitig einer Fahrschiene 83, die einen Oberflansch 84, einen Steg 85 sowie einen Unterflansch 86 aufweist. Die beiden Fahrwerkswangen 81 und 82 sind durch zwei hintereinaner, d.h. in Fahrrichtung nebeneinander liegende Säulen 87 starr miteinander verbunden. Die beiden Säulen 87 verlaufen unterhalb der Fahrschiene 83.

Oberhalb der Fahrschiene 83 sind an den einander zugekehrten Innenseiten der beiden Fahrwerkswangen 81 un 82 insgesamt vier Laufräder 88 und 89 drehbar gelagert. Dabei sind von den insgesamt vier Rädern lediglich die zwei dem Betrachter zugekehrten Räder 88 und 89 zu erkennen.

Auf der Außenseite der linken Fahrwerkswange 82 ist ein Kettenzug 1 angeflanscht, der einen ähnlichen Aufbau aufweist, wie zuvor anhand der Figuren beschrieben.

Um das Katzfahrwerk 80 längs der Fahrschiene 83 zu bewegen, ist an der rechten Fahrwerkswange 81 ein Fahrmotor 90 vorgesehen, der über ein Getriebegehäuse 91 mit der rechten Fahrwerkswange 81 verbunden ist. Aus dem Getriebegehäuse 91 steht eine nicht erkennbare Ausgangswelle vor, die in der Zeichnung nicht erkennbarist, weil sie von Teilen der Fahrwerkswange verdeckt ist, und die beispielsweise ein Ritzel trägt, das mit einer Verzahnung 92 auf einem Spurkranz des Laufrades 88 zusammenwirkt. Auf diese Weise kann durch in Gang setzen des Antriebsmotors 90 über das Getriebe 91 das Rad 88 angetrieben werden, um das Katzfahrewerk 80 längs der Fahrschiene 83 zu bewegen.

Um die Kraft zu erfassen, die benötigt wird, das Katzfahrwerk zu bewegen, weist das Getriebe einen inneren Aufbau auf, ähnlich dem, wie er anhand der Figuren 2-4 erläutert ist. Dabei besteht das Wesentliche darin, dass in einem der Lagerschilde neben einem Lagersitz einer Welle oder Zwischenwelle, wie zuvor ausführlich erläutert, ein DMS-Sensor 65 angeordnet ist, um die Querkraft in diesem Bereich an dieser Welle oder Zwischenwelle zu erfassen. Hieraus ergibt sich ein Maß für den Fahr- oder Rollwiderstand auf den das Katzfahrwerk 80 trifft.

In der gleichen Weise kann auch ein Kranfahrwerk gestaltet sein, so dass einer weiteren ausführlichen Erläuterung nicht mehr bedarf.

Bei einem Wälzlager erzeugen die Wälzkörper am Außenring eine punktuelle Belastung. Die punktuelle Belastung wandert während der Rotation des Innenrings gegenüber dem Außenring längs dem Außenring. Diese Situation kann bei dem Ausführungsbeispiel nach den vorhergehenden Figuren dazu führen, dass der Sensor 65 zusätzlich zu dem eigentlichen Nutzsignal noch ein Störsignal abgibt. Das Störsignal hat einen weitgehend sinusförmigen Verlauf und eine Frequenz, die abhängig ist von dem Vorbeilauf der Kugeln des Rillenkugellagers 52, d.h. der Drehzahl und der Anzahl der Lagerkuglen. Sobald eine Kugel des Kugellagers 52 den Steg 63 passiert, entsteht ein zusätzliches Drucksignal. Dieses Drucksignal hat sein Minimum, wenn jeweils zwei Kugeln dem Steg 62 benachbart stehen, weil dann ein Teil des Kraftflusses am Steg vorbei geleitet wird.

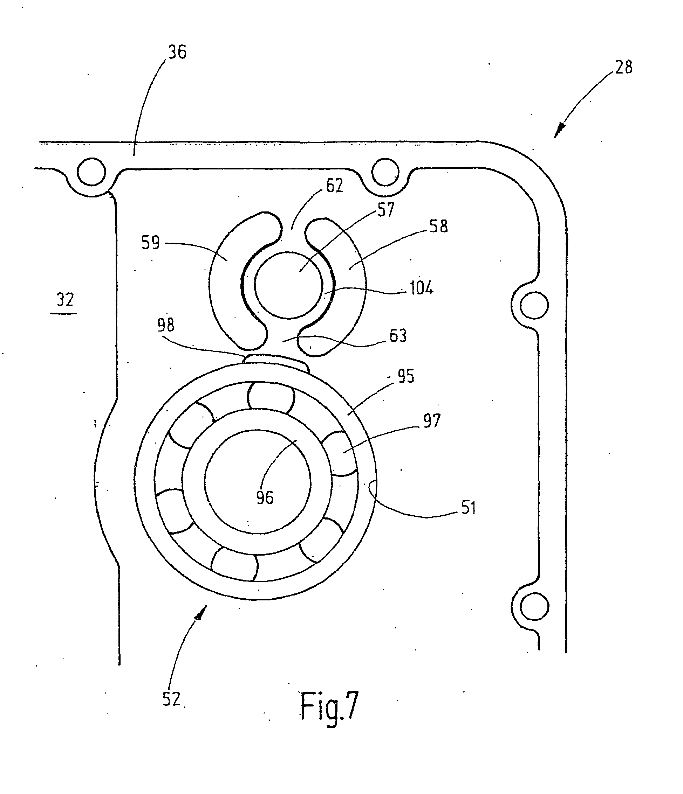

Die Amplitude dieses Störsignals lässt sich verringern, wenn eine Anordnung gemäß Figur 7 verwendet wird.

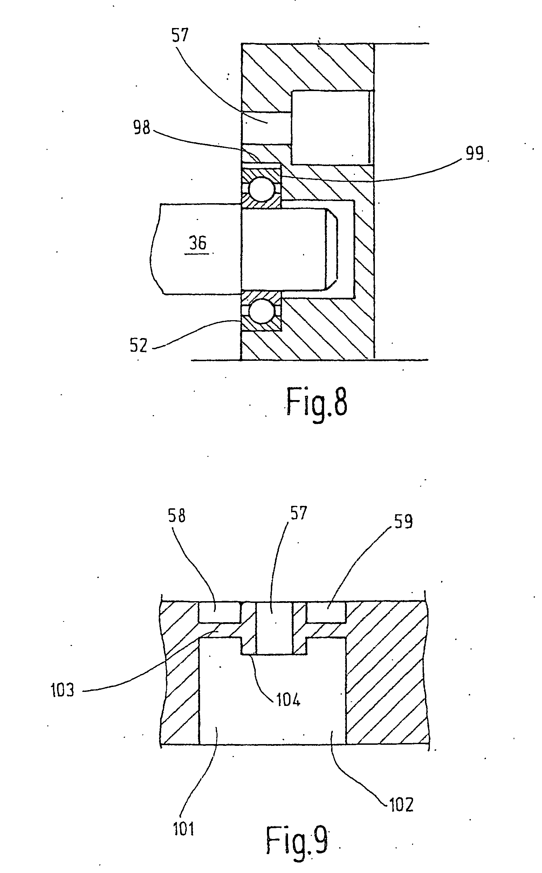

Wie dort zu erkennen ist, setzt sich das in dem Lagersitz 51 steckende Rillenkugellager 52 aus einem Außenlagerring 95 und einem dazu koaxialen Innenlagerring 96 zusammen. Im Spalt zwischen den beiden Lagerringen 95, 96 sind Kugellagerkugeln 97 enthalten, die durch einen nicht veranschaulichten Käfig auf gleichem Abstand voneinander gehalten werden. Dem Steg 63 gegenüber enthält der Lagersitz 51 in seiner Außenumfangsfläche eine Nut 98, die sich, wie Figur 8 erkennen lässt, über die gesamte Tiefe des Lagersitzes 51 bis zu der begrenzenden Planschulter 99 reicht. Die Breite der Nut 98 bewegt sich, gemessen in Richtung längs dem Umfang der Außenumfangsfläche des Außenrings 95, ca. zwischen dem 0,75-fachen des Durchmessers der Lagerkugeln 97 und dem 1,5-fachen des Kugelabstands.

Durch die Verwendung der Nut 97 entsteht eine Lastverteilung auf die beiden in Umfangsrichtung liegenden Kanten der Nut, so dass die Amplitude des Störsignals, dass durch den Vorbeilauf der Kugellagerkugeln 97 verursacht wird, reduziert ist.

Ohne Anspruch auf Vollständigkeit, lässt sich dieser Vorgang etwa wie folgt erklären: Zufolge der Anordnung des Sensors 65 und der ihn umgebenden Struktur mit den beiden Taschen 58 und 59 ist das Gehäuse aus der Sicht des Außenrings 95 an dieser Stelle weicher und nachgiebiger als an den übrigen Stellen. Wenn die Kugellagerkugeln 97 an dieser Stelle vorbeilaufen, können sie dort ein sehr konzentriertes Drucksignal erzeugen, dass unmittelbar über den Steg 63 auf den Sensor 65 übertragen wird.

Durch die Verwendung der Nut 98, die eine entsprechende empirisch zu ermittelnder Ausdehnung in Umfangsrichtung hat, wird verhindert, dass die vorbeilaufende Kugel beim Durchlaufen direkt auf den Steg wirkt. Die Nut verteilt die Kraft auf beide Nutränder und verhindert, dass ein größeres Signal an den Sensor 65 erzeugt wird als wenn die Kugeln beidseits des Stegs stehen würden, d.h. gegenüber der Mittelachse des Stegs 63 versetzt stehen. Anders ausgedrückt, durch die Verwendung der Nut wird die von der Welle 36 ausgehende Radialkraft auch dann über mehrere Kugeln 97 in den Sensor 65 eingeleitet, wenn eine der Kugeln 97 unmittelbar auf der Verbindungsgeraden liegt, die einerseits die Drehachse der Welle 36 und andererseits die Mitte der Bohrung 57 schneidet. Diese Verbindungsgerade liegt im Übrigen parallel zu dem Kraftvektor, der entsteht, wenn an der Kette eine Last hängt.

Die Messempfindlichkeit der Anordnung lässt sich steigern, wenn mit den auf der Innenseite der Gehäusewand 36 sichtbaren Taschen 58, 59 korrespondierende Taschen 101 und 102 vorhanden sind, die auch, wie Figur 8, 9 zeigt gegebenenfalls ineinander übergehen können. Zwischen den miteinander fluchtenden Taschen 58, 101 bzw. 59, 102 verbleibt eine membranförmige Wand 103, die im Wesentlichen nur noch als Gehäuseabdichtung wirkt. Die Bohrung 57 für den Sensor 65 wird damit zu einer Art Nabe 104, die, was den Haupteil der zu übertragenden Kräfte anbelangt, lediglich noch über die beiden Stege 62 und 63 mit der Gehäusewand 32 verbunden ist. Dies hat zur Folge, dass die Gehäusewand in Richtung des besagten Kraftvektors, d.h. in Richtung parallel zu der Mittelachse der beiden Stege 62, 63, noch nachgiebiger wird.

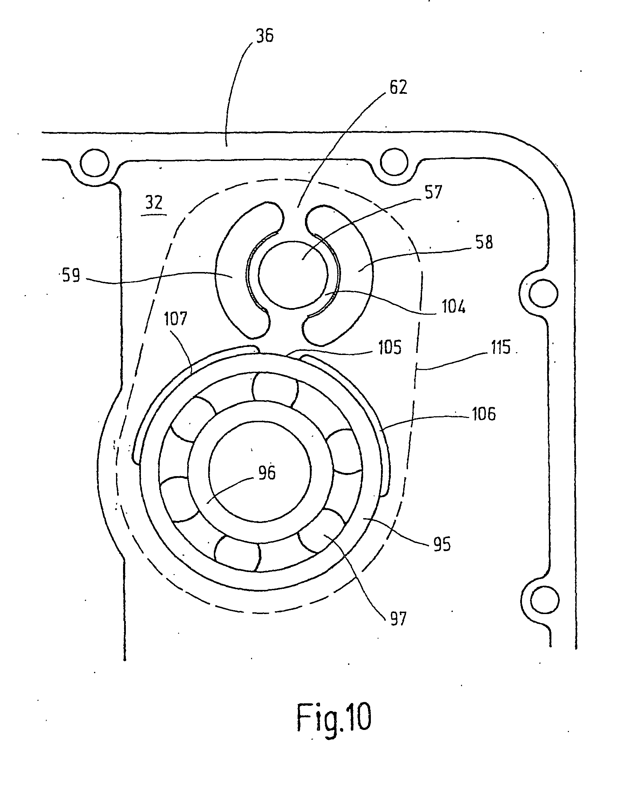

Eine weitere Möglichkeit die Störsignale zu minimieren zeigt Figur 10. Hier enthält der Lagersitz 51 eine Rippe 105, die ebenfalls bis zu der Schulter 99 reicht. Die Rippe 105 befindet sich unmittelbar auf der Verbindungsgeraden zwischen der Achse des Kugellagers 52 und der Achse der Bohrung 57 und damit sozusagen in Verlängerung des Stegs 63.

Beidseits der Rippe 105 ist die Außenumfangsfläche des Lagersitzes 51 durch Nuten oder Taschen 106 und 107 versehen. Auch diese Taschen reichen bis an die Schulter 99 und liegen gekrümmt um die Außenumfangsfläche des Außenrings 95 herum. Die Ausdehnung der beiden Ausnehmungen 106, 107 zusammengenommen entspricht einem Zentriwinkel von ca. 100° bis 180°.

Das Lastsignal wird somit nunmehr im Bereich der Rippe 105 auf den Sensor 65 übertragen.

Zufolge dieser Anordnung ist die an der Rippe 105 ankommende Radialkraft, unabhängig davon, ob die Rippe mittig zwischen zwei Kugeln steht oder ob sich eine Kugel genau über den Steg 5 befindet. Auch hat die zufolge der laufenden Kugeln stattfindende Verformung des Außenrings 95 praktisch keinen Einfluss mehr auf die Unterstützungskraft im Bereich der Rippe 105.

Wie groß der Zentriwinkel ist, über den sich umfangsmäßig beide Ausnehmungen 106, 107 erstrecken können, ohne dass die Amplitude des Störsignals zu groß wird, ist empirisch zu ermitteln.

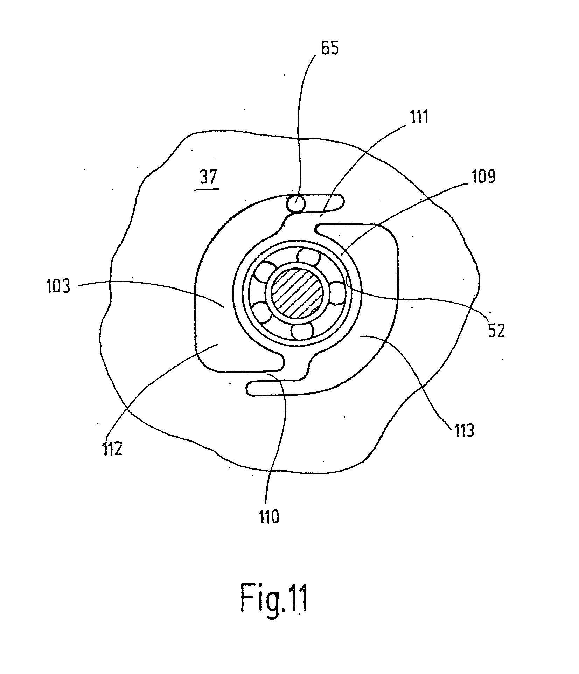

Figur 11 zeigt schließlich eine Anordnung, bei der der Lagersitz 52 in einer Nabe 109 enthalten ist. Die Nabe 109 ist an zwei einander diametral gegenüberliegenden Stellen über Biegefedern 110, 111 mit der Gehäusewand 32 verbunden. Radial bezüglich der Biegefedern 110, 111 bzw. der verbleibenden Nabe 109, befinden sich Taschen 112 und 113, die am Grund durch eine Membranwand 103 gemäß Figur 9 verschlossen sind.

In einer der Nuten 112 sitzt der Sensor 65. Der Sensor 65 bekommt bei dieser Anordnung immer das Summensignal aus den Kräften sämtlicher Kugellagerkugeln, unabhängig davon, wo aktuell sich die Kugeln innerhalb des Kugellagers 52 befinden. Damit ähnelt von der Wirkung her die Anordnung der Anordnung nach Figur 10, denn auch hier bekommt der Sensor 65 das Summenkraftsignal über alle Kugeln, die sich in jener Hälfte des Kugellagers 52 befinden, die dem Sensor 65 benachbart ist.

Bei den erläuterten Ausführungsbeispielen ist davon ausgegangen worden, dass die Struktur in der Umgebung des Lagersitzes 51 und der Aufnahmebohrung 57 unmittelbar in der Gehäuseseitenwand bzw. im Gehäuseboden 32 ausgebildet ist. Dies hat fertigungstechnisch zwar Vorteile, unterliegt aber Einschränkungen insofern als die Gehäuseschale häufig aus Guss hergestellt ist und somit die Elastizitätsverhältnisse in der Umgebung der Aufnahmebohrung 57 größeren Streuungen unterliegen. Eine Verbesserung lässt sich erreichen, wenn der Lagersitz 51 zusammen mit der die Aufnahmebohrung 57 unmittelbar umgebende Struktur in Gestalt der Aufnahmebohrung 57, der Taschen 58, 59 bzw. 101,102 und der Stege 62, 63 in einem Einsatzstück aus Stahl untergebracht ist. Dieses Einsatzstück ist in Figur 10 mit einer gestrichelten Linie 115 angedeutet. Das Einsatzstück 115 sitzt in einer entsprechenden Ausnehmung oder Tasche in dem Gehäuseboden 32. Hierdurch wird es auch möglich, die beschriebene Anordnung in Gehäusen aus Materialien mit geringer Federwirkung bspw. Aluminiumguss unterzubringen.

Ein Hebezeug.oder ein Fahrantrieb für Kräne und Katzfahrwerke weist ein Getriebegehäuse auf, in dem wenigstens eine Ausgangswelle drehbar gelagert ist. In einem der Lagerschilde, zwischen denen die Ausgangswelle gelagert ist, sitzt neben einem Lagersitz ein DMS-Sensor. Mit Hilfe des Sensors wird die elastische Verformung des betreffenden Lagerschilds erfasst, wobei die Verformung eine Funktion der Hakenlast des Hebezeugs oder des Fahrwiderstands ist.

## Patentansprüche

1. Hebezeug (1,70)
mit einem Antriebsmotor (3,72,90),
mit einem Getriebegehäuse (2,91), an das der Antriebsmotor (3,72) angeflascht ist, in das die Motorwelle (17) hineinragt und das einander gegenüber stehende Lagerschilde (29,32) bildet, die Lagersitze (37,38,43,44, 51,53) für Wellen (34,35,36) enthalten,
mit einer Ausgangswelle (36), die in dem Getriebegehäuse (2) gelagert ist und die mit einem Ende über eines der Lagerschilde (29,32) auskragt, wobei mittels des auskragenden Endes ein Lastaufnahmemittel (8,74) angetrieben ist, und
mit einem Sensor (65), der neben einem der Lagersitze (37,38,43,44,51,53) angeordnet ist, um dort die elastische Verformung des betreffenden Lagerschildes (29,32) infolge der Belastung des Lastaufnahmemittels (8,74) zu erfassen.

2. Katz- oder Kranfahrwerk (80),
mit einem Fahrwerksrahmen (81,82),
mit an dem Fahrwerkrahmen (81,82) mittelbar oder unmittelbar gelagerten Rädern (88,89),
mit einem Antriebsmotor (3,72,90),
mit einem Getriebegehäuse (2,91), an das der Antriebsmotor (3,72,90) angeflascht ist, in das die Motorwelle (17) hineinragt und das einander gegenüber stehende Lagerschilde (29,32) bildet, die Lagersitze (37,38,43,44, 51,53) für Wellen (34,35,36) enthalten,
mit einer Ausgangswelle (36), mittels derer wenigstens eines der Räder (88,89) antreibbar ist und die in dem Getriebegehäuse (2,91) gelagert ist, und
mit einem Sensor (65), der neben einem der Lagersitze (37,38,43,44,51,53) angeordnet ist, um dort die elastische Verformung des betreffenden Lagerschildes (29,32) infolge der Belastung des jeweils angetriebenen Rades zu erfassen.

3. Hebezeug oder Katz- oder Kranfahrwerk nach Anspruch 1 oder 2, **dadurch gekennzeichnet, dass** der Antriebsmotor (3,90) ein Drehstromasynchronmotor oder ein permanent erregter Gleichstrommotor ist.

4. Hebezeug nach Anspruch 1, **dadurch gekennzeichnet, dass** das Hebezeug (1,70) ein Kettenzug, ein Bandzug oder ein Seilzug ist.

5. Hebezeug nach Anspruch 1, **dadurch gekennzeichnet, dass** auf dem auskragenden Ende der Ausgangswelle (36) eine Kettennuss (56) oder eine Bandscheibe sitzt.

6. Hebezeug nach Anspruch 1, **dadurch gekennzeichnet, dass** das auskragende Ende mit einer Seiltrommel (73) gekuppelt ist.

7. Vorrichtung oder Katz- oder Kranfahrwerk nach Anspruch 1 oder 2, **dadurch gekennzeichnet, dass** in dem Getriebegehäuse (2) ein Zahnrädergetriebe enthalten ist, das wenigstens eine Zwischenwelle (34,35,36) aufweist, die ein Ritzel (42,47) und ein Rad (41,48) trägt, wobei das Ritzel (42,47) mit einem Zahnrad (55) der Ausgangswelle (36) kämmt.

8. Hebezeug oder Katz- oder Kranfahrwerk nach Anspruch 1 oder 2, **dadurch gekennzeichnet, dass** das Zahnrädergetriebe ein gerade oder ein schräg verzahntes Zahnrädergetriebe ist.

9. Hebezeug oder Katz- oder Kranfahrwerk nach Anspruch 8, **dadurch gekennzeichnet, dass** das Zahnradgetriebe ein Stirnzahnradgetriebe ist.

10. Hebezeug oder Katz- oder Kranfahrwerk nach Anspruch 1 oder 2, **dadurch gekennzeichnet, dass** der Sensor (65) ein DMS-Sensor ist.

11. Hebezeug oder Katz- oder Kranfahrwerk nach Anspruch 1 oder 2, **dadurch gekennzeichnet, dass** der Sensor (65) in einen in sich geschlossenem Gehäuse sitzt, aus dem Anschlussdrähte (66) herausführen.

12. Hebezeug oder Katz- oder Kranfahrwerk nach Anspruch 11, **dadurch gekennzeichnet, dass** der Sensor (65) mit seinem Gehäuse in einer Aufnahmebohrung (57) des betreffenden Lagerschilds (29,32) sitzt.

13. Hebezeug oder Katz- oder Kranfahrwerk nach Anspruch 12, **dadurch gekennzeichnet, dass** das Gehäuse des Sensors (65) mit Presssitz in der Aufnahmebohrung (57) sitzt.

14. Hebezeug oder Katz- oder Kranfahrwerk nach Anspruch 11, **dadurch gekennzeichnet, dass** das Gehäuse zylindrisch ist das die Längsachse des Gehäuses parallel zu der Achse des Lagersitzes (37,38,43,44,51,53) ausgerichtet ist.

15. Hebezeug oder Katz- oder Kranfahrwerk nach Anspruch 1 oder 2, **dadurch gekennzeichnet, dass** der Sensor (65) auf der Verlängerung desjenigen Radius, der benachbarten Lagerbohrung (37,38,43,44,51,53) angeordnet ist, der parallel zu dem Querkraftvektor liegt, der an dem betreffenden Lagerende angreift.

16. Hebezeug oder Katz- oder Kranfahrwerk nach Anspruch 1 oder 2, **dadurch gekennzeichnet, dass** der Sensor (65) neben jenem Lagersitz (51) angeordnet ist, an dem das nicht auskragende Ende der Ausgangswelle (36) gelagert ist.

17. Hebezeug oder Katz- oder Kranfahrwerk nach Anspruch 1 oder 2, **dadurch gekennzeichnet, dass** der Sensor (65) an einem Lagersitz (37,38,43,44) einer Zwischenwelle (34,35) angeordnet ist, die zu einem in dem Getriebegehäuse (2) befindlichen Zahnrädergetriebe gehört.

18. Hebezeug oder Katz- oder Kranfahrwerk nach Anspruch 17, **dadurch gekennzeichnet, dass** der Lagersitz (37,38,43,44) der Zwischenwelle (34,35) ein Lagersitz ist, der dem Ritzel (42,47) der Zwischenwelle (34,36) benachbart ist.

19. Hebezeug oder Katz- oder Kranfahrwerk nach Anspruch 12, **dadurch gekennzeichnet, dass** die Aufnahmebohrung (57) für den Sensor (65) seitlich frei gestellt ist, derart, dass zwei auf der Verlängerung des Durchmessers liegende Stege (62,63) verbleiben, deren Achsen, gemessen in der Ebene des Lagerschildes (28,32), parallel zum Kraftvektor ausgerichtet sind.

20. Hebezeug oder Katz- oder Kranfahrwerk nach Anspruch 19, **dadurch gekennzeichnet, dass** zur Erzeugung der Freistellung der Aufnahmebohrung (57) neben der Aufnahmebohrung (57) zwei sich bezüglich der Aufnahmebohrung (57) gegenüberliegende Taschen (58,59) angeordnet sind.

21. Hebezeug oder Katz- oder Kranfahrwerk nach Anspruch 19, **dadurch gekennzeichnet, dass** die Aufnahmebohrung für den Sensor beidseitig von vier, vorzugsweise nierenförmigen, Taschen begrenzt ist, die paarweise und deckungsgleich von beiden Seiten der Gehäusewand in diese hineingesenkt sind, derart, dass zwischen miteinander deckungsgleichen Taschen eine Wandmembrane gebildet ist.

22. Hebezeug oder Katz- oder Kranfahrwerk nach Anspruch 21, **dadurch gekennzeichnet, dass** die Dicke der Wandmembrane zwischen 2 und 10 mm liegt.

23. Hebezeug oder Katz- oder Kranfahrwerk nach Anspruch 20 oder 21, **dadurch gekennzeichnet, dass** jede Tasche (58,59) die Aufnahmebohrung (57) mit einem Umfangswinkel zwischen 60° und 140° umgibt.

24. Hebezeug oder Katz- oder Kranfahrwerk nach Anspruch 20 oder 21, **dadurch gekennzeichnet, dass** die Wandstärke der Aufnahmebohrung (57) im Bereich der Taschen (58,59) zwischen 2 mm und 10 mm, vorzugsweise um 4 mm, liegt.

25. Hebezeug oder Katz- oder Kranfahrwerk nach Anspruch 12, **dadurch gekennzeichnet, dass** in der Umgebung der Aufnahmebohrung (57) für den Sensor (65) die Wandstärke des Gehäuses (2) vermindert ist.

26. Hebezeug oder Katz- oder Kranfahrwerk nach Anspruch 19, **dadurch gekennzeichnet, dass** die Dicke der Stege (62,63) gemessen in Richtung parallel zu der Achse der benachbarten Welle (36) zwischen 3 mm und 20 mm beträgt.

27. Hebezeug oder Katz- oder Kranfahrwerk nach Anspruch 19, **dadurch gekennzeichnet, dass** die Dicke der Stege (62,63) zwischen 10% und 100% der axialen Länge des benachbarten Wälzlagers (52) beträgt.

28. Hebezeug oder Katz- oder Kranfahrwerk nach Anspruch 1 oder 2, **dadurch gekennzeichnet, dass** der Lagersitz (51) für die Getriebewelle (36), neben der der Sensor (65) angeordnet ist, ein Lagersitz für ein Wälz- oder Gleitlager ist.

29. Hebezeug oder Katz- oder Kranfahrwerk nach Anspruch 28, **dadurch gekennzeichnet, dass** der Lagersitz (51) für das Wälz- oder Gleitlager (52) eine in Richtung parallel zu der Drehachse des Wälz- oder Gleitlagers (52) sich erstreckende Nut (98) enthält, die symmetrisch zu einer Ebene liegt, in der die Achse der betreffenden Getriebewelle (36) und die Achse der Aufnahmebohrung (57) des Sensors (65) liegt.

30. Hebezeug oder Katz- oder Kranfahrwerk nach Anspruch 29, **dadurch gekennzeichnet, dass** die Nut (98) gemessen in Umfangsrichtung des Lagersitzes (51) eine Erstreckung aufweist, die größer ist als der Durchmesser eines Wälzkörpers (97).

31. Hebezeug oder Katz- oder Kranfahrwerk nach Anspruch 29, **dadurch gekennzeichnet, dass** die Breite der Nut (98) gemessen in Umfangsrichtung des Lagersitzes (51) zwischen dem 1-Fachen und dem 2-Fachen des Durchmessers eines Wälzkörpers (97) des Wälzlagers (52) liegt.

32. Hebezeug oder Katz- oder Kranfahrwerk nach Anspruch 1 oder 2, **dadurch gekennzeichnet, dass** der Lagersitz (51) für das Wälz- oder Gleitlager (52) eine in Richtung parallel zu der Drehachse des Wälz- oder Gleitlagers (52) sich erstreckende Rippe (105) enthält, die symmetrisch zu einer Ebene liegt, in der die Achse der betreffenden Getriebewelle (36) und die Achse der Aufnahmebohrung (57) des Sensors (65) liegt, und dass beidseits der Rippe (105) in dem Lagersitz (51) Nuten (106,107) enthalten sind.

33. Hebezeug oder Katz- oder Kranfahrwerk nach Anspruch 32, **dadurch gekennzeichnet, dass** die Nuten (106,107), die beidseits der Rippe (105) in dem Lagersitz (51) enthalten sind, sich zusammen in Umfangsrichtung des Lagesitzes (51) über einen Zentriwinkel erstrecken, derart, dass der Außenring (95) des Wälzlagers () über einen Umfangswinkel von zwischen 100° und. 180° freigestellt ist und in diesem Bereich lediglich über die Rippe (105) abgestützt ist.

34. Hebezeug oder Katz- oder Kranfahrwerk nach Anspruch 1 oder 2, **dadurch gekennzeichnet, dass** der Lagersitz (109) für das Wälzlager (51) mittels einstückiger Biegefedern (110,111) aufgehängt ist.

35. Hebezeug oder Katz- oder Kranfahrwerk nach einem oder mehreren der vorhergehenden Ansprüche, **dadurch gekennzeichnet, dass** die Aufnahmebohrung (57) für den Sensor (65) und der Lagersitz (51) für das benachbarte Wälz- oder Gleitlager (52) in einem gemeinsamen Einsatzstück (115) ausgebildet sind, das in einer Aufnahmetasche in der Gehäusewand (32) sitzt.

## Claims

1. Hoist (1, 70)
with a drive motor (3, 72, 90),
with a gearbox (2, 91), on which the drive motor (3, 72) is flange-mounted and into which the motor shaft (17) projects and which forms bearing plates (29, 32) standing opposite one another, which contain bearing seats (37, 38, 43, 44, 51, 53) for shafts (34, 35, 36),
with an output shaft (36), which is mounted in the gearbox (2) and which projects over one of the bearing plates (29, 32) at one end, wherein a load carrying means (8, 74) is driven by means of the projecting end, and
with a sensor (65), which is arranged next to one of the bearing seats (37, 38, 43, 44, 51, 53) in order to detect the elastic deformation of the respective bearing plate (29, 32) there as a result of the loading of the load carrying means (8, 74).

2. Trolley or crane travelling gear (80),
with a travelling gear frame (81, 82),
with wheels (88, 89) mounted directly or indirectly on the travelling gear frame (81, 82),
with a drive motor (3, 72, 90),
with a gearbox (2, 91), on which the drive motor (3, 72, 90) is flange-mounted and into which the motor shaft (17) projects and which forms bearing plates (29, 32) standing opposite one another, which contain bearing seats (37, 38, 43, 44, 51, 53) for shafts (34, 35, 36),
with an output shaft (36), by means of which at least one of the wheels (88, 89) can be driven and which is mounted in the gearbox (2, 91), and
with a sensor (65), which is arranged next to one of the bearing seats (37, 38, 43, 44, 51, 53) in order to detect the elastic deformation of the respective bearing plate (29, 32) there as a result of the loading of the respectively driven wheel.

3. Hoist or trolley or crane travelling gear according to claim 1 or 2, **characterised in that** the drive motor (3, 90) is a three-phase induction motor or a permanently excited d.c. motor.

4. Hoist according to claim 1, **characterised in that** the hoist (1, 70) is a chain hoist, belt hoist or rope hoist.

5. Hoist according to claim 1, **characterised in that** a chain sprocket (56) or a belt pulley sits on the projecting end of the output shaft (36).

6. Hoist according to claim 1, **characterised in that** the projecting edge is coupled to a rope drum (73).

7. Device or trolley or crane travelling gear according to claim 1 or 2, **characterised in that** arranged in the gearbox (2) is a toothed gearing system, which has at least one intermediate shaft (34, 35, 36), which bears a pinion (42, 47) and a wheel (41, 48), wherein the pinion (42, 47) meshes with a gear wheel (55) of the output shaft (36).

8. Hoist or trolley or crane travelling gear according to claim 1 or 2, **characterised in that** the toothed gearing system is a spur-toothed or a helical toothed gearing system.

9. Hoist or trolley or crane travelling gear according to claim 8, **characterised in that** the toothed gearing system is a cylindrical toothed gearing system.

10. Hoist or trolley or crane travelling gear according to claim 1 or 2, **characterised in that** the sensor (65) is a strain gauge sensor.

11. Hoist or trolley or crane travelling gear according to claim 1 or 2, **characterised in that** the sensor (65) sits in an enclosed housing, from which connection wires (66) extend.

12. Hoist or trolley or crane travelling gear according to claim 11, **characterised in that** the sensor (65) with its housing sits in a receiving hole (57) of the respective bearing plate (29, 32).

13. Hoist or trolley or crane travelling gear according to claim 12, **characterised in that** the housing of the sensor (65) sits in the receiving hole (57) in a press fit arrangement.

14. Hoist or trolley or crane travelling gear according to claim 11, **characterised in that** the housing is cylindrical so that the longitudinal axis of the housing is oriented parallel to the axis of the bearing seat (37, 38, 43, 44, 51, 53).

15. Hoist or trolley or crane travelling gear according to claim 1 or 2, **characterised in that** the sensor (65) is arranged on the extension of the radius of the adjacent bearing hole (37, 38, 43, 44, 51, 53), which lies parallel to the shearing stress vector, which acts on the respective bearing end.

16. Hoist or trolley or crane travelling gear according to claim 1 or 2, **characterised in that** the sensor (65) is arranged next to the bearing seat (51), on which the non-projecting end of the output shaft (36) is mounted.

17. Hoist or trolley or crane travelling gear according to claim 1 or 2, **characterised in that** the sensor (65) is arranged on a bearing seat (37, 38, 43, 44) of an intermediate shaft (34, 35), which belongs to a toothed gearing system located in the gearbox (2).

18. Hoist or trolley or crane travelling gear according to claim 17, **characterised in that** the bearing seat (37, 38, 43, 44) of the intermediate shaft (34, 35) is a bearing seat, which is adjacent to the pinion (42, 47) of the intermediate shaft (34, 36).

19. Hoist or trolley or crane travelling gear according to claim 12, **characterised in that** the receiving hole (57) for the sensor (65) is left laterally unsupported in such a manner that there remain two webs (62, 63) lying on the extension of the diameter, the axes of which webs, measured in the plane of the bearing plate (28, 32), are oriented parallel to the force vector.

20. Hoist or trolley or crane travelling gear according to claim 19, **characterised in that** to leave the receiving hole (57) unsupported, two cavities (58, 59), which are located opposite one another with respect to the receiving hole (57), are arranged next to the receiving hole (57).

21. Hoist or trolley or crane travelling gear according to claim 19, **characterised in that** the receiving hole for the sensor is delimited on both sides by four preferably kidney-shaped cavities, which are incorporated into the housing wall in pairs to be congruent from both sides of said housing wall in such a manner that a wall membrane is formed between mutually congruent cavities.

22. Hoist or trolley or crane travelling gear according to claim 21, **characterised in that** the thickness of the wall membrane amounts to between 2 and 10 mm.

23. Hoist or trolley or crane travelling gear according to claim 20 or 21, **characterised in that** each cavity (58, 59) surrounds the receiving hole (57) at an angle at circumference of between 60° and 140°.

24. Hoist or trolley or crane travelling gear according to claim 20 or 21, **characterised in that** the wall thickness of the receiving hole (57) in the region of the cavities (58, 59) amounts to between 2 mm and 10 mm, preferably about 4 mm.

25. Hoist or trolley or crane travelling gear according to claim 12, **characterised in that** the wall thickness of the housing (2) is reduced in the surrounding area of the receiving hole (57) for the sensor (65).

26. Hoist or trolley or crane travelling gear according to claim 19, **characterised in that** the thickness of the webs (62, 63) amounts to between 3 mm and 20 mm measured in the direction parallel to the axis of the adjacent shaft (36).

27. Hoist or trolley or crane travelling gear according to claim 19, **characterised in that** the thickness of the webs (62, 63) amounts to between 10% and 100% of the axial length of the adjacent rolling bearing (52).

28. Hoist or trolley or crane travelling gear according to claim 1 or 2, **characterised in that** the bearing seat (51) for the gear shaft (36), next to which the sensor (65) is arranged, is a bearing seat for a rolling or sliding bearing.

29. Hoist or trolley or crane travelling gear according to claim 28, **characterised in that** the bearing seat (51) for the rolling or sliding bearing (52) contains a groove (98), which extends in a direction parallel to the rotational axis of the rolling or sliding bearing (52) and lies symmetrically to a plane, in which the axis of the respective gear shaft (36) and the axis of the receiving hole (57) of the sensor (65) lie.

30. Hoist or trolley or crane travelling gear according to claim 29, **characterised in that** the groove (98) has an extent, measured in the circumferential direction of the bearing seat (51), which is larger than the diameter of a roll body (97).

31. Hoist or trolley or crane travelling gear according to claim 29, **characterised in that** the width of the groove (98), measured in the circumferential direction of the bearing seat (51), amounts to between 1-times and 2-times the diameter of a roll body (97) of the rolling bearing (52).

32. Hoist or trolley or crane travelling gear according to claim 1 or 2, **characterised in that** the bearing seat (51) for the rolling or sliding bearing (52) contains a rib (105), which extends in a direction parallel to the rotational axis of the rolling or sliding bearing (52) and lies symmetrically to a plane, in which the axis of the respective gear shaft (36) and the axis of the receiving hole (57) of the sensor (65) lie, and that grooves (106, 107) are configured in the bearing seat (51) on both sides of the rib (105).

33. Hoist or trolley or crane travelling gear according to claim 32, **characterised in that** the grooves (106, 107), which are configured in the bearing seat (51) on both sides of the rib (105), extend together in the circumferential direction of the bearing seat (51) over a central angle in such a manner that the outer ring (95) of the rolling bearing () is left unsupported over an angle at circumference of between 100° and 180° and is only supported in this region by means of the rib (105).

34. Hoist or trolley or crane travelling gear according to claim 1 or 2, **characterised in that** the bearing seat (109) for the rolling bearing (51) is suspended by means of spiral springs (110, 111) in one piece.

35. Hoist or trolley or crane travelling gear according to one or more of the preceding claims, **characterised in that** the receiving hole (57) for the sensor (65) and the bearing seat (51) for the adjacent rolling or sliding bearing (52) are configured in a joint insert piece (115), which sits in a receiving cavity in the housing wall (32).

## Revendications

1. Engin de levage (1, 70),
comprenant un moteur d'entraînement (3, 72, 90),
comprenant un carter de mécanisme de transmission (2, 91), auquel le moteur d'entraînement (3, 72) est fixé par brides, dans lequel avance l'arbre de moteur (17), et qui forme des flasques (29, 32) qui sont situés en vis-à-vis l'un de l'autre et comportent des alésages de palier (37, 38, 43, 44, 51, 53) pour des arbres (34, 35, 36),
comprenant un arbre de sortie (36) qui est supporté dans le carter de mécanisme de transmission (2) et qui dépasse avec une extrémité par rapport à un des flasques (29, 32), un moyen supportant une charge (8, 74) étant entraîné à l'aide de l'extrémité en saillie, et
comprenant un capteur (65) qui est disposé à côté d'un des alésages de palier (37, 38, 43, 44, 51, 53) afin d'y enregistrer la déformation élastique du flasque (29, 32) concerné, suite à la sollicitation du moyen supportant une charge (8, 74).

2. Mécanisme de roulement de chariot ou de grue (80),
comprenant un châssis de mécanisme de roulement (81, 82),
comprenant des roues (88, 89) montées directement ou indirectement sur le châssis de mécanisme de roulement (81, 82),
comprenant un moteur d'entraînement (3, 72, 90),
comprenant un carter de mécanisme de transmission (2, 91), auquel le moteur d'entraînement (3, 72, 90) est fixé par brides, dans lequel avance l'arbre de moteur (17), et qui forme des flasques (29, 32) qui sont situés en vis-à-vis l'un de l'autre et comportent des alésages de palier (37, 38, 43, 44, 51, 53) pour des arbres (34, 35, 36),
comprenant un arbre de sortie (36) qui permet d'entraîner au moins une des roues (88, 89) et qui est supporté dans le carter de mécanisme de transmission (2, 91), et
comprenant un capteur (65) qui est disposé à côté d'un des alésages de palier (37, 38, 43, 44, 51, 53) afin d'y enregistrer la déformation élastique du flasque (29, 32) concerné, suite à la sollicitation de la roue respective entraînée.

3. Engin de levage ou mécanisme de roulement de chariot ou de grue selon la revendication 1 ou 2, **caractérisé par le fait que** le moteur d'entraînement (3, 90) est un moteur asynchrone triphasé ou un moteur à courant continu à excitation permanente.

4. Engin de levage selon la revendication 1, **caractérisé par le fait que** l'engin de levage (1, 70) est un appareil à chaîne, un appareil à bande ou un appareil à câble.

5. Engin de levage selon la revendication 1, **caractérisé par le fait qu'**un pignon à chaîne (56) ou une poulie sont montés sur l'extrémité en porte-à-faux de l'arbre de sortie (36).

6. Engin de levage selon la revendication 1, **caractérisé par le fait que** l'extrémité en porte-à-faux est accouplée à un tambour à câble (73).

7. Dispositif ou mécanisme de roulement de chariot ou de grue selon la revendication 1 ou 2, **caractérisé par le fait que** le carter de mécanisme de transmission (2) contient une transmission par engrenages qui présente au moins un arbre intermédiaire (34, 35, 36) portant un pignon (42, 47) et une roue (41, 48), le pignon (42, 47) engrenant avec une roue dentée (55) de l'arbre de sortie (36).

8. Engin de levage ou mécanisme de roulement de chariot ou de grue selon la revendication 1 ou 2, **caractérisé par le fait que** la transmission par engrenages est un engrenage à denture droite ou hélicoïdale.

9. Engin de levage ou mécanisme de roulement de chariot ou de grue selon la revendication 8, **caractérisé par le fait que** la transmission par engrenages est un engrenage à denture frontale.

10. Engin de levage ou mécanisme de roulement de chariot ou de grue selon la revendication 1 ou 2, **caractérisé par le fait que** le capteur (65) est une jauge extensométrique.

11. Engin de levage ou mécanisme de roulement de chariot ou de grue selon la revendication 1 ou 2, **caractérisé par le fait que** le capteur (65) est monté dans un boîtier fermé en soi dont sortent des fils de connexion (66).

12. Engin de levage ou mécanisme de roulement de chariot ou de grue selon la revendication 11, **caractérisé par le fait que** le capteur (65) est monté avec son boîtier dans un logement (57) du flasque (29, 32) concerné.

13. Engin de levage ou mécanisme de roulement de chariot ou de grue selon la revendication 12, **caractérisé par le fait que** le boîtier du capteur (65) est monté avec ajustage serré dans le logement (57).

14. Engin de levage ou mécanisme de roulement de chariot ou de grue selon la revendication 11, **caractérisé par le fait que** le boîtier est cylindrique et que l'axe longitudinal du boîtier est parallèle à l'axe de alésage de palier (37, 38, 43, 44, 51, 53).

15. Engin de levage ou mécanisme de roulement de chariot ou de grue selon la revendication 1 ou 2, **caractérisé par le fait que** le capteur (65) est disposé dans le prolongement du rayon de l'alésage de palier (37, 38, 43, 44, 51, 53) contigu qui est parallèle au vecteur de force transversale agissant sur l'extrémité de palier concernée.

16. Engin de levage ou mécanisme de roulement de chariot ou de grue selon la revendication 1 ou 2, **caractérisé par le fait que** le capteur (65) est disposé à côté de l'alésage de palier (51) dans lequel est monté l'extrémité non saillante de l'arbre de sortie (36).

17. Engin de levage ou mécanisme de roulement de chariot ou de grue selon la revendication 1 ou 2, **caractérisé par le fait que** le capteur (65) est disposé sur un alésage de palier (37, 38, 43, 44) d'un arbre intermédiaire (34, 35), qui fait partie d'un engrenage se trouvant dans le carter de mécanisme de transmission (2).

18. Engin de levage ou mécanisme de roulement de chariot ou de grue selon la revendication 17, **caractérisé par le fait que** l'alésage de palier (37, 38, 43, 44) de l'arbre intermédiaire (34, 35) est un alésage qui est contigu au pignon (42, 47) de l'arbre intermédiaire (34, 35).

19. Engin de levage ou mécanisme de roulement de chariot ou de grue selon la revendication 12, **caractérisé par le fait que** le logement (57) pour le capteur (65) est dégagé sur les côtés, de manière à laisser subsister deux parois (62, 63) qui sont situées dans le prolongement du diamètre et dont les axes sont parallèles au vecteur de force, mesuré dans le plan du flasque (28, 32).

20. Engin de levage ou mécanisme de roulement de chariot ou de grue selon la revendication 19, **caractérisé par le fait que** pour créer le dégagement du logement (57), deux cavités (58, 59) sont disposées à côté du logement (57), en se faisant face par rapport à ce dernier.

21. Engin de levage ou mécanisme de roulement de chariot ou de grue selon la revendication 19, **caractérisé par le fait que** le logement pour le capteur est délimité de part et d'autre par quatre cavités, de préférence réniformes, qui sont réalisées par lamage dans la paroi de carter, par paires et de façon à coïncider, depuis les deux côtés de ladite paroi, de manière à former une paroi membrane entre des cavités coïncidant l'une avec l'autre.

22. Engin de levage ou mécanisme de roulement de chariot ou de grue selon la revendication 21, **caractérisé par le fait que** l'épaisseur de la paroi membrane est comprise entre 2 et 10 mm.

23. Engin de levage ou mécanisme de roulement de chariot ou de grue selon la revendication 20 ou 21, **caractérisé par le fait que** chaque cavité (58, 59) entoure le logement (57) avec un angle inscrit compris entre 60° et 140°.

24. Engin de levage ou mécanisme de roulement de chariot ou de grue selon la revendication 20 ou 21, **caractérisé par le fait que** dans la région des cavités (58, 59), l'épaisseur de paroi du logement (57) est comprise entre 2 mm et 10 mm et est de préférence d'environ 4 mm.

25. Engin de levage ou mécanisme de roulement de chariot ou de grue selon la revendication 12, **caractérisé par le fait que** l'épaisseur de paroi du carter (2) est diminuée dans le voisinage du logement (57) pour le capteur (65).

26. Engin de levage ou mécanisme de roulement de chariot ou de grue selon la revendication 19, **caractérisé par le fait que** l'épaisseur des parois (62, 63), mesurée dans la direction parallèle à l'axe de l'arbre (36) contigu, est comprise entre 3 mm et 20 mm.

27. Engin de levage ou mécanisme de roulement de chariot ou de grue selon la revendication 19, **caractérisé par le fait que** l'épaisseur des parois (62, 63) est comprise entre 10% et 100% de la longueur axiale du palier à roulement (52) contigu.

28. Engin de levage ou mécanisme de roulement de chariot ou de grue selon la revendication 1 ou 2, **caractérisé par le fait que** l'alésage de palier (51) pour l'arbre de transmission (36), à côté duquel est disposé le capteur (65), est un alésage destiné à un palier à roulement ou à glissement.

29. Engin de levage ou mécanisme de roulement de chariot ou de grue selon la revendication 28, **caractérisé par le fait que** l'alésage (51) pour le palier à roulement ou à glissement (52) comporte une rainure (98) qui s'étend parallèlement à l'axe de rotation du palier à roulement ou à glissement (52) et qui est symétrique par rapport à un plan dans lequel se situent l'axe de l'arbre de transmission (36) concerné et l'axe du logement (57) pour le capteur (65).

30. Engin de levage ou mécanisme de roulement de chariot ou de grue selon la revendication 29, **caractérisé par le fait que**, mesuré dans la direction périphérique de l'alésage de palier (51), la rainure (98) a une dimension qui est supérieure au diamètre d'un corps de roulement (97).

31. Engin de levage ou mécanisme de roulement de chariot ou de grue selon la revendication 29, **caractérisé par le fait que**, mesuré dans la direction périphérique de l'alésage de palier (51), la largeur de la rainure (98) est comprise entre une fois et deux fois le diamètre d'un corps de roulement (97) du palier à roulement (52).

32. Engin de levage ou mécanisme de roulement de chariot ou de grue selon la revendication 1 ou 2, **caractérisé par le fait que** l'alésage (51) pour le palier à roulement ou à glissement (52) comporte une nervure (105) qui s'étend parallèlement à l'axe de rotation du palier à roulement ou à glissement (52) et qui est symétrique par rapport à un plan dans lequel se situent l'axe de l'arbre de transmission (36) concerné et l'axe du logement (57) pour le capteur (65), et **par le fait que** de part et d'autre de la nervure (105), l'alésage de palier (51) comporte des rainures 106, 107).

33. Engin de levage ou mécanisme de roulement de chariot ou de grue selon la revendication 32, **caractérisé par le fait que** les rainures (106, 107), qui sont prévues dans l'alésage de palier (51), de part et d'autre de la nervure (105), s'étendent ensemble dans la direction périphérique de l'alésage de palier (51), sur un angle au centre tel que la bague extérieure (95) du palier à roulement (52) soit dégagée sur un angle inscrit compris entre 100° et 180°, et ne soit soutenue dans cette région que par la nervure (105).

34. Engin de levage ou mécanisme de roulement de chariot ou de grue selon la revendication 1 ou 2, **caractérisé par le fait que** l'alésage (109) pour le palier à roulement (52) est suspendu au moyen de ressorts de flexion (110, 111) monoblocs.

35. Engin de levage ou mécanisme de roulement de chariot ou de grue selon une ou plusieurs des revendications précédentes, **caractérisé par le fait que** le logement (57) pour le capteur (65) et l'alésage (51) pour le palier à roulement ou à glissement (52) contigu sont réalisés dans un insert (115) commun, qui est monté dans une cavité prévue dans la paroi de carter (32).
